# EUROPEAN PATENT SPECIFICATION

(11) **EP 4 567 943 B1**
(45) Date of publication and mention of the grant of the patent: **09.09.2026**
(21) Application number: 23215092.0
(22) Date of filing: 07.12.2023
(51) Int. Cl.: H01M 8/1053, H01M 8/1027, C25C 7/04, H01M 8/103, H01M 8/1032, H01M 8/18, C25B 13/08, H01M 8/10

(54) **BILAYER MEMBRANES COMPOSED OF TWO INTERCONNECTED LAYERS WITH DIFFERENT PHOSPHORIC ACID DOPING ABILITY**
ZWEISCHICHTIGE MEMBRANEN AUS ZWEI MITEINANDER VERBUNDENEN SCHICHTEN MIT UNTERSCHIEDLICHER PHOSPHORSÄUREDOTIERUNGSFÄHIGKEIT
MEMBRANES BICOUCHES COMPOSÉES DE DEUX COUCHES INTERCONNECTÉES AYANT DIFFÉRENTES CAPACITÉS DE DOPAGE À L'ACIDE PHOSPHORIQUE

(43) Date of publication of application: 11.06.2025
(73) Proprietor: University of Patras, 26504 Rion, Patra (GR); Kallitsis, Ioannis, Kastellokampos, Patra (GR); Andreopoulou, Ekaterini, 26443 Patra (GR); Andrikopoulos, Konstantinos, Patra (GR)
(72) Inventor: KALLITSIS, Ioannis, Patra (GR); ANDREOPOULOU, Ekaterini, 26443 Patra (GR); ANDRIKOPOULOS, Konstantinos, Patra (GR)
(74) Representative: Kosti, Vasiliki

(56) References cited:
- US-A1- 2008 160 378
- GUO ZUNMIN ET AL: "Recent advances in phosphoric acid-based membranes for high-temperature proton exchange membrane fuel cells", JOURNAL OF ENERGY CHEMISTRY, ELSEVIER, AMSTERDAM, NL, vol. 63, 15 July 2021 (2021-07-15), pages 393 - 429, XP086917545, ISSN: 2095-4956, [retrieved on 20210715], DOI: 10.1016/J.JECHEM.2021.06.024
- KONSTANTINIA D. PAPADIMITRIOU ET AL: "Cross-Linking of Side Chain Unsaturated Aromatic Polyethers for High Temperature Polymer Electrolyte Membrane Fuel Cell Applications", MACROMOLECULES, vol. 44, no. 12, 28 June 2011 (2011-06-28), pages 4942 - 4951, XP055006741, ISSN: 0024-9297, DOI: 10.1021/ma200351z
- PEFKIANAKIS ELEFTERIOS K ET AL: "Novel polymer electrolyte membrane , based on pyridine containing poly(ether sulfone), for application in high-temperature fuel cells", MACROMOLECULAR RAPID COMMUNICATIONS, WILEY-VCH, DE, vol. 26, no. 21, 1 January 2005 (2005-01-01), pages 1724 - 1728, XP002495312, ISSN: 1022-1336, DOI: 10.1002/MARC.200500540

## Description

### FIELD OF THE INVENTION

The present disclosure relates to high temperature polymer electrolyte membranes, methods of production of such membranes and uses thereof. Said membranes of the invention form a bilayered structure.

### BACKGROUND

Hydrogen-based fuels play an important role in the decarbonisation of sectors where emissions are hard to abate and alternative solutions are either unavailable or difficult to implement, such as heavy industry and long-distance transport. Fuel cells have attracted attention as a clean electrical energy source since hydrogen or methanol, for instance, is electrochemically oxidized in each cell to directly convert and extract chemical energy of a fuel into electrical energy. Polymer electrolyte fuel cells, in particular, can be used as alternative power sources for automobiles, home co-generation systems, portable power generators etc. Such a polymer electrolyte fuel cell is provided with at least a membrane electrode assembly in which an electrode catalyst layer is attached to each of two faces of a proton exchange membrane mainly including a polymer electrolyte membrane.

High temperature polymer electrolyte membrane fuel cells (HT-PEMFC), operating in the 120-200 ⁰C temperature range, exhibit excellent tolerance to carbon monoxide (CO) from reformat hydrogen and allow for simplified water and thermal management. CO tolerance is understood to mean operation in the presence of CO with voltage loss at the hydrogen electrode of less than 10-20 mV (Yang et al; Journal of Power Sources; 103:1-9 (2001)). They are typically constructed around a proton conducting membrane based on poly- benzimidazole (PBI) imbibed with phosphoric acid. The proton transport between the electrodes is made possible by the phosphoric acid and the proton conductivity increases with increasing phosphoric acid content. (Jeong et et al; 2017: J Power Sources; 363:365-374; https://doi.org/10.1016/j.jpowsour.2017.07.109).

Generally, in order for a membrane to be suitable for HT-PEM fuel cells, it has to meet several criteria such as chemical and electrochemical stability in the fuel cell operating environment, mechanical strength and stability under cell operating conditions, high proton conductivity, low permeability to reactant gas, and high water transport and low production cost.

Due to the currently increased demand for optimized polymer electrolyte fuel cells, there is a need for optimized membranes which fulfil the above-mentioned criteria. Such membranes are provided by the present invention.

### SUMMARY

The present disclosure relates to high temperature polymer electrolyte membranes, methods of production of such membranes and uses thereof. Said membranes of the invention form a bilayered structure. The invention is set out in the appended set of claims.

### BRIEF DESCRIPTION OF THE DRAWINGS

Figure 1: Retention of 85%wt H₃PO₄ of doped membranes comprising Units A and B respectively after exposure at RH (relative humidity) =80-90%, T=80 °C.
Figure 2: ¹H-NMR spectrum of the precursor polymer, Copolymer 1.
Figure 3: ¹H-NMR spectrum of the brominated polymer, Copolymer 2.
Figure 4: ATR spectra of the precursor polymer (upper curve) and Br-polymer (lower curve).
Figure 5: Doping in 85% H₃PO₄ of the brominated polymer (circle symbol) and copolymer 3 (square symbol) as a function of time.
Figure 6 (A-B): Bilayer membranes with the structures of the polymers used in each layer.
Figure 7: ATR spectra copolymer 3, the top layer of the bilayer membrane, the bottom layer of the bilayer membrane and the brominated polymer.

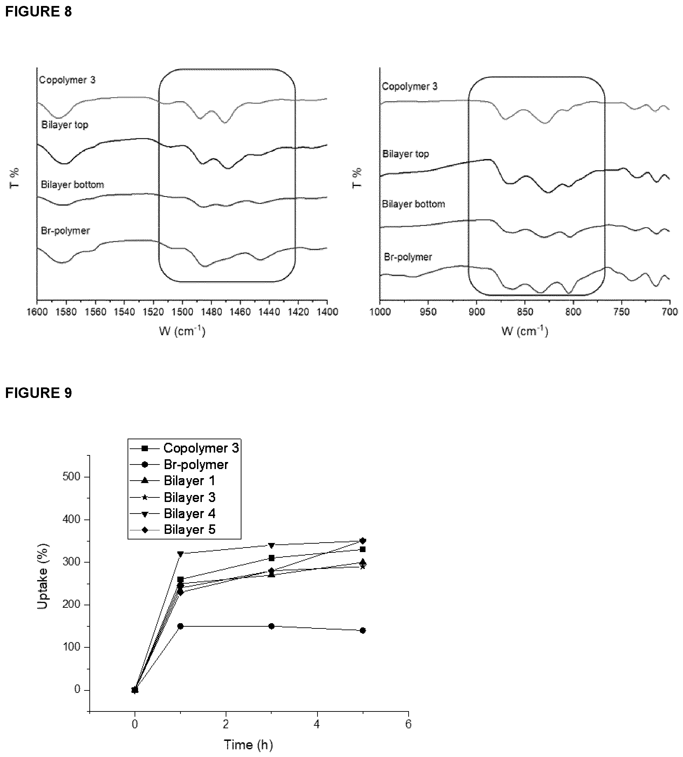

Figure 8: ATR spectra copolymer 3, the top layer of the bilayer membrane, the bottom layer of the bilayer membrane and the brominated polymer. The left spectra show the region at 1600-1400 cm⁻¹, while the right spectra show the region at 1000-700 cm⁻¹.
Figure 9: Doping in 85% H₃PO₄ of the brominated polymer (circle symbol), copolymer 3 (square symbol) and the bilayer membrane (triangle) as a function of time.

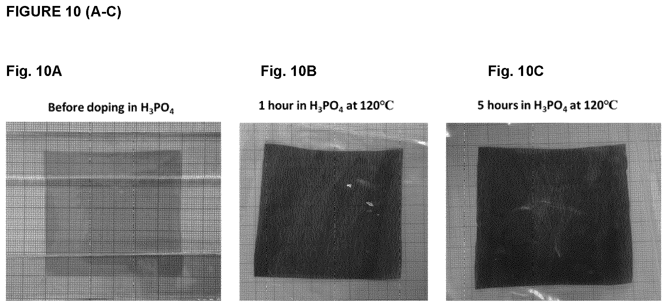

Figure 10 (A-C) : Dimensional stability of a bilayer membrane before doping (Fig. 10A) after 1 hour (Fig. 10B) and 5 hours (Fig. 10C) of doping in H₃PO₄ at 120 ⁰C.

### DETAILED DESCRIPTION

It is a subject of the present disclosure to provide novel, high temperature polymer electrolyte membranes, methods of production of such membranes and uses thereof.

High temperature polymer electrolyte membrane fuel cells (HT- PEMFC) offer certain advantages when compared to low temperature polymer electrolyte membrane fuel cells (LT- PEMFC) such as, (a)high operation temperature that allows the use of impure hydrogen with high CO content, (b) system simplification, and (c)high combined heat and power efficiency. For instance, a LT-PEMFC has a very low tolerance to impurities in fuel, thus requiring 99.99999% pure hydrogen which is costly to produce. The heat produced from the LT-PEMFC is also of a low temperature and thus is difficult to transfer away for use in other processes. These drawbacks can be overcome through the use of HT- PEMFCs. In order to achieve a fuel cell operation in temperatures above 100 ⁰C, electrolytes having high ionic conductivity are desired and are mainly based on polymers imbibed with a strong acid such as phosphoric acid (PA). These doped membranes should combine high acid uptake ability with mechanical robustness, especially at the operation temperature of around 160 to 200 ⁰C. Aromatic polymers such as polybenzimidazole and aromatic polyethers are the most commonly used polymers. Polybenzimidazole (PBI)-type polymers provide high acid uptake and moderate mechanical stability of the doped membranes, while the latter show lower acid uptake and higher operation temperatures. Although the high operation temperature enables better reaction kinetics for the catalyst on both electrodes, the high amount of phosphoric acid on the cathode restricts the operation, demanding high catalyst (i.e.platinum) loading. Moreover, the extensive swelling of the polymeric membrane on the x-y axes during phosphoric acid doping, may create problems in the event of deswelling due to the increase of the operation temperature, leading to condensation of phosphoric acid. Stabilization of the polymer electrolyte membranes has been performed using crosslinking, enabling thus the increase of operation temperature (Kallitsis et al; Journal of Power Sources; 2028; 379:144-154).

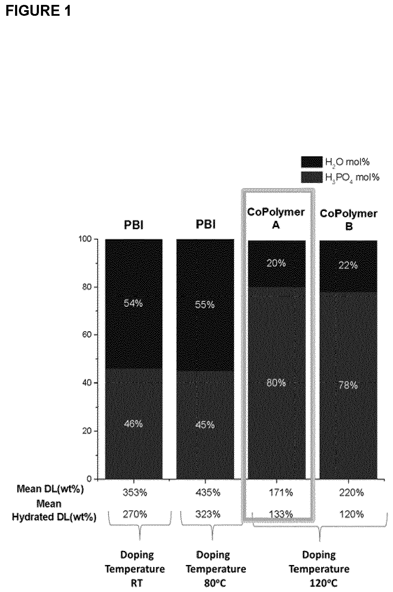

The inventors of the present disclosure have managed to resolve these issues by inventing bilayer polymer electrolyte membranes which combine a bottom crosslinked layer with lower acid uptake and a second top layer having the ability to absorb a high amount of acid, acting as an acid reservoir. Such a bilayer membrane format can act both as a template for controlling the membrane swelling/deswelling, as well as prevent catalyst flooding with phosphoric acid on the cathode side. Generally, in a fuel cell, phosphoric acid in the PA-doped PEM would migrate to the cathode and anode during the process of constructing the membrane electrode assembly. Thus, the phosphoric acid adsorbed by the anode would migrate to the cathode through the membrane. To enhance the retention of PA, the materials used for the cathode should have low PA adsorption, while the materials applied for the anode should have high PA adsorption. It is generally known that the affinity of PA to water is close to the affinity of PA to polymers, leading to an easy leakage of PA from the polymeric membrane, due its interaction with water, at lower temperatures and high humidity during the cell start-up and shut-down. Moreover, in the case of PBI, a large amount of loosely bound PA molecules is used in the PA/PBI membranes, which helps to improve the proton conductivity. Thus, the loosely bound PA inside the membrane could easily leach out with increased water presence, due to the very weak interaction between the loosely bound PA and the polymer. When a PA/PBI membrane is exposed to a humid environment, water molecules penetrate into the PA/PBI system and take loosely bound PA molecules away from the system (PA leaching). However, recently used copolymers (Charalampopoulos, C.; Kallitsis, K. J.; Anastasopoulos, C.; Daletou, M. K.; Neophytides, S. G.; Andreopoulou, A. K.; Kallitsis, J. K. Crosslinked Polymer Electrolytes of High Pyridine Contents for HT-PEM Fuel Cells. Int J Hydrogen Energy 2020, 45 (60), 35053-35063. https://doi.org/10.1016/j.ijhydene.2020.06.004). bearing 2,5 and 2,6 pyridine main chain units (e.g. UNIT A and UNIT B respectively) have shown higher acid retention, mainly due to the stronger interaction of the PA molecules with pyridine units and also due to the lower acid uptake, which reduces the amount of the loosely bound PA as shown in the Figure 1.

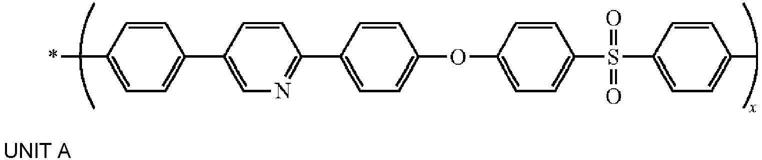

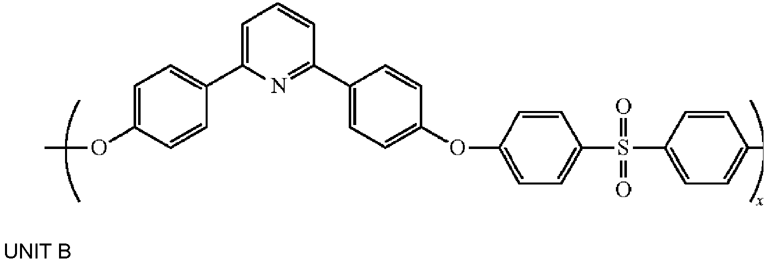

In order to achieve the formation of bilayer polymer electrolyte membranes with optimized properties, the inventors utilized main chain aromatic polyether copolymers containing main chain pyridine units (APEPY), with various pyridine content, in order to control acid uptake. The bilayer membrane consists of a bottom layer of a self cross linkable copolymer, having low pyridine content and bearing side double bond moieties functionalized with bromine, for quick thermal crosslinking during casting, and of a second layer of a linear copolymer, with high pyridine content. More specifically a self crosslinkable APEPY with low pyridine content (e.g. Br-polymer, Copolymer 2) was used for the first layer, while a linear APEPY with high pyridine content (e.g. Copolymer 3) and high phosphoric acid uptake was used as the top layer. The formation of such a bilayer requires a balanced crosslinking of the first layer and deposition of the solution of the second layer in order to avoid dissolution, shrinkage, and even skin formation resulting in delamination of the two layers during phosphoric acid doping and membrane operation. 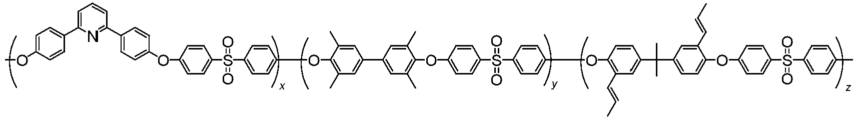 COPOLYMER 1 (wherein 10%<x<40%, 30%<y<50%, 10%<z<50%, and wherein x+y+z=100%) 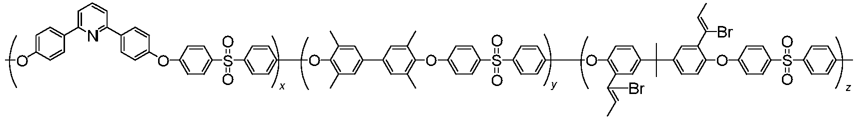 COPOLYMER 2 (wherein 10%<x<40%, 30%<y<50%, 10%<z<50%, and wherein x+y+z=100%) 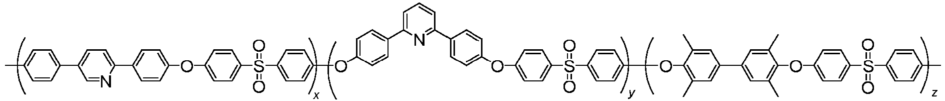 COPOLYMER 3 (wherein 30%<x<60%, 10%<y<40%, 0%<z<60%, and wherein x+y+z=100%)

In one aspect, the present disclosure relates to a bilayer polymer electrolyte membrane comprising a bottom crosslinked copolymer layer with low pyridine content for lower acid uptake and a top linear copolymer layer, with high pyridine content, for higher acid uptake.

In one embodiment said bilayer polymer electrolyte membrane comprises a bottom crosslinked copolymer layer with low pyridine content for lower acid uptake, wherein said acid is phosphoric acid, and a top linear copolymer layer, with high pyridine content for higher acid uptake, wherein said acid is phosphoric acid.

In one embodiment said bilayer polymer electrolyte membrane comprises a bottom crosslinked copolymer layer with low pyridine content for lower acid uptake, wherein said acid is phosphoric acid, and a top linear copolymer layer, with high pyridine content for higher acid uptake, wherein said acid is phosphoric acid, and wherein the acid uptake of said bilayer membrane is about 250 to 350 % wt.

In one embodiment said bilayer polymer electrolyte membrane comprises a bottom crosslinked copolymer layer said copolymer being copolymer 2 of the formula 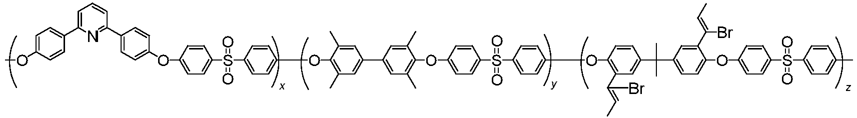
wherein 10%<x<40%, 30%<y<50%, 10%<z<50%, and wherein x+y+z=100%
and a top linear copolymer layer, with high pyridine content for higher acid uptake, wherein said acid is phosphoric acid.

In one embodiment said bilayer polymer electrolyte membrane comprises a bottom crosslinked copolymer layer with low pyridine content for lower acid uptake said acid being phosphoric acid and a top linear copolymer layer said copolymer being copolymer 3 of the formula 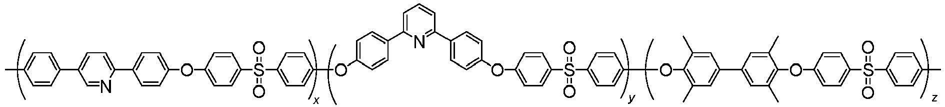 wherein 30%<x<60%, 10%<y<40%, 0%<z<60%, and wherein x+y+z=100%.

In one embodiment said bilayer polymer electrolyte membrane comprises a bottom crosslinked copolymer layer said copolymer being copolymer 2 of the formula 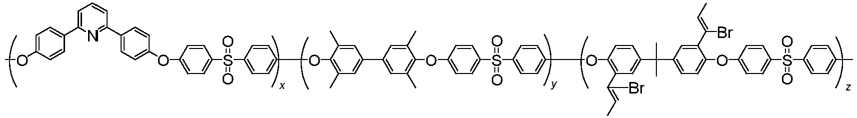
wherein 10%<x<40%, 30%<y<50%, 10%<z<50%, and wherein x+y+z=100%
and a top linear copolymer layer said copolymer being copolymer 3 of the formula 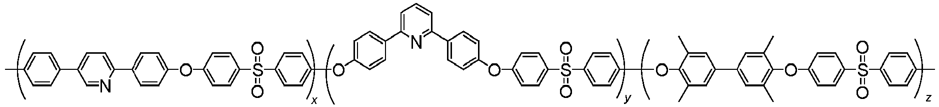
wherein 30%<x<60%, 10%<y<40%, 0%<z<60%, and wherein x+y+z=100%

In one embodiment said bilayer polymer electrolyte membrane comprises a bottom crosslinked copolymer layer said copolymer being copolymer 2 of the formula 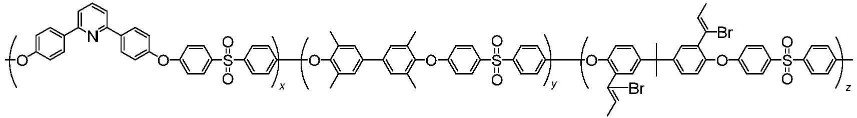
wherein 10%<x<40%, 30%<y<50%, 10%<z<50%, and wherein x+y+z=100%
and a top linear copolymer layer said copolymer being copolymer 3 of the formula 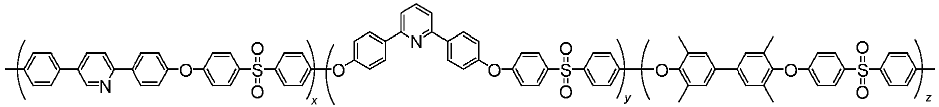
wherein 30%<x<60%, 10%<y<40%, 0%<z<60%, and wherein x+y+z=100%
and wherein said membrane is imbibed with phosphoric acid.

In one embodiment said bilayer polymer electrolyte membrane consists of a bottom crosslinked copolymer layer said copolymer being copolymer 2 of the formula 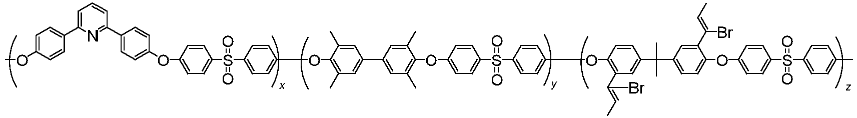
wherein 10%<x<40%, 30%<y<50%, 10%<z<50%, and wherein x+y+z=100%
and a top linear copolymer layer said copolymer being copolymer 3 of the formula 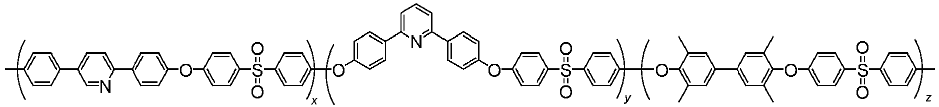
wherein 30%<x<60%, 10%<y<40%, 0%<z<60%, and wherein x+y+z=100%
and wherein said membrane is imbibed with phosphoric acid.

In another aspect the present disclosure relates to a method of producing a bilayer polymer electrolyte membrane comprising the steps of
- synthesizing a first copolymer with low pyridine content for lower acid uptake in order to form the bottom layer of said membrane
- adding a second copolymer with high pyridine content for higher acid uptake on top of said first copolymer forming the bottom layer of said membrane.

In one embodiment said method comprises the steps of
- synthesizing a first copolymer with low pyridine content for lower acid uptake in order to form the bottom layer of said membrane, wherein said first copolymer is copolymer 2 of the formula 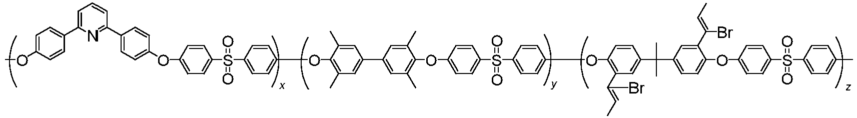 wherein 10%<x<40%, 30%<y<50%, 10%<z<50%, and wherein x+y+z=100%
- adding a second copolymer with high pyridine content for higher acid uptake on top of said first copolymer forming the bottom layer of said membrane.

In one embodiment said method comprises the steps of
- synthesizing a first copolymer with low pyridine content for lower acid uptake in order to form the bottom layer of said membrane
- adding a second copolymer with high pyridine content for higher acid uptake on top of said first copolymer forming the bottom layer of said membrane, wherein said second copolymer is copolymer 3 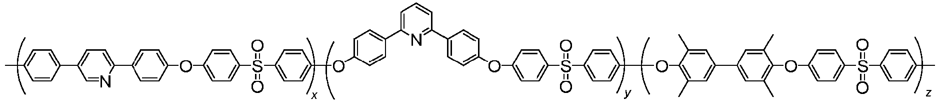 wherein 30%<x<60%, 10%<y<40%, 0%<z<60%, and wherein x+y+z=100%

In one embodiment said method comprises the steps of
- synthesizing a first copolymer with low pyridine content for lower acid uptake in order to form the bottom layer of said membrane, wherein said first copolymer is copolymer 2 of the formula 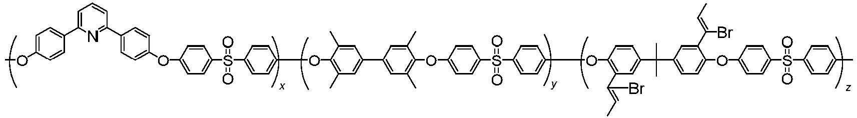 wherein 10%<x<40%, 30%<y<50%, 10%<z<50%, and wherein x+y+z=100%
- adding a second copolymer with high pyridine content for higher acid uptake on top of said first copolymer forming the bottom layer of said membrane, wherein said second copolymer is copolymer 3 of the formula 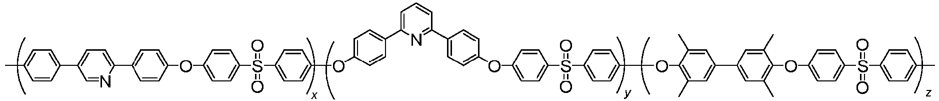 wherein 30%<x<60%, 10%<y<40%, 0%<z<60%, and wherein x+y+z=100%.

In one embodiment said method comprises the steps of
- mixing copolymer 1 of the formula 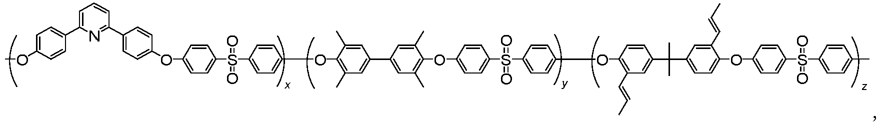
   wherein 10%<x<40%, 30%<y<50%, 10%<z<50%, and wherein x+y+z=100%,
   with N-bromosuccinimide and chloroform in order to synthesize copolymer 2 of the formula 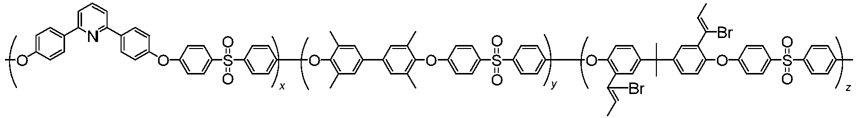
   wherein 10%<x<40%, 30%<y<50%, 10%<z<50%, and wherein x+y+z=100%
- forming a first bottom membrane layer consisting of copolymer 2
- adding copolymer 3 of the formula 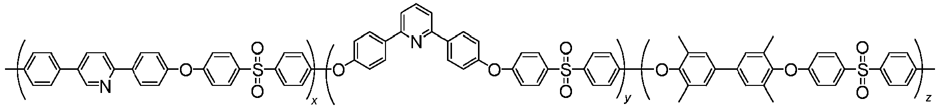
   wherein 30%<x<60%, 10%<y<40%, 0%<z<60%, and wherein x+y+z=100%,
   on top of said first bottom membrane layer consisting of copolymer 2.

In one embodiment said method comprises the steps of
- mixing copolymer 1 of the formula 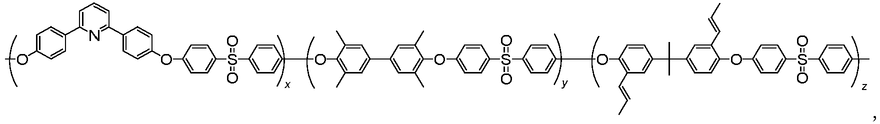
   wherein 10%<x<40%, 30%<y<50%, 10%<z<50%, and wherein x+y+z=100%,
   with N-bromosuccinimide and chloroform in order to synthesize copolymer 2 of the formula 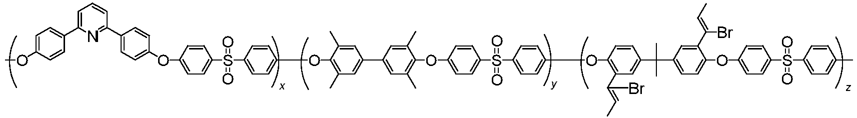
   wherein 10%<x<40%, 30%<y<50%, 10%<z<50%, and wherein x+y+z=100%
- dissolving copolymer 2 in N-methyl-2-pyrrolidone
- pouring said dissolved polymeric solution in a mold or surface
- drying of said polymeric solution so that the solvent is removed and a gel-like membrane is formed
- adding copolymer 3 of the formula 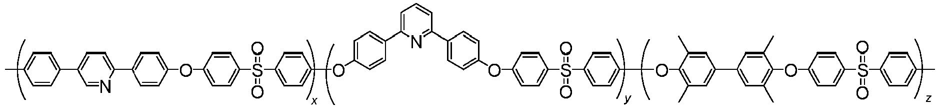
   wherein 30%<x<60%, 10%<y<40%, 0%<z<60%, and wherein x+y+z=100%,
   dissolved in N,N-dimethylacetamide on top of said first bottom gel like membrane layer consisting of copolymer 2
- drying of said membrane on top of which copolymer 3 was added, so that a bilayer membrane is formed.

In one embodiment said method comprises the steps of
- mixing copolymer 1 of the formula 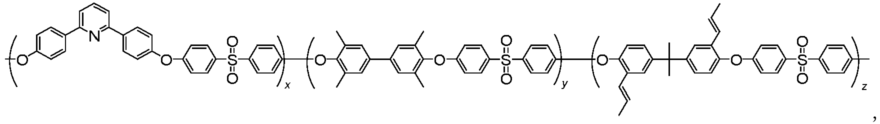
   wherein 10%<x<40%, 30%<y<50%, 10%<z<50%, and wherein x+y+z=100%,
   with N-bromosuccinimide and chloroform in order to synthesize copolymer 2 of the formula 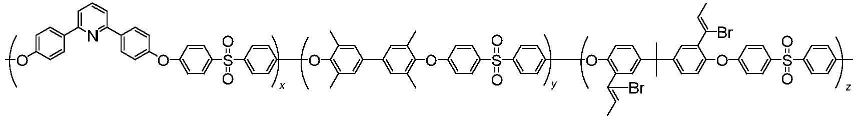
   wherein 10%<x<40%, 30%<y<50%, 10%<z<50%, and wherein x+y+z=100%
- dissolving copolymer 2 in N-methyl-2-pyrrolidone
- pouring said dissolved polymeric solution in a mold or surface
- drying of said polymeric solution so that the solvent is partially removed and a gel-like membrane is formed
- adding copolymer 3 of the formula 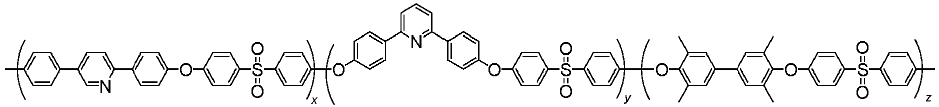
   wherein 30%<x<60%, 10%<y<40%, 0%<z<60%, and wherein x+y+z=100%,
   dissolved in N,N-dimethylacetamide, on top of said first bottom gel like membrane layer consisting of copolymer 2
- drying of said membrane on top of which copolymer 3 was added, so that a bilayer membrane is formed.
- immersing said bilayer membrane into a solution of phosphoric acid so that a phosphoric acid doped bilayer membrane is formed.

In an even further aspect the present invention relates to a bilayer polymer electrolyte membrane directly obtainable or obtained by a method of the invention.

In another aspect the present disclosure relates to a use of a bilayer polymer electrolyte membrane of the invention for the production of a fuel cell and/or an electrolyzer and/ or a redox flow battery.

In another aspect the present invention relates to a use of a bilayer polymer electrolyte membrane of the invention for the production of a fuel cell, wherein said fuel cell is a high temperature polymer electrolyte membrane fuel cell.

### Definitions

Unless otherwise defined, scientific and technical terms used herein have the meanings that are commonly understood by those of ordinary skill in the art. In the event of any latent ambiguity, definitions provided herein take precedent over any dictionary or extrinsic definition.

The term "doping level" in the context of the present disclosure refers to weight per cent % of the acid, preferably phosphoric acid, absorbed of each membrane of the invention.

The term "fuel cell" in the context of the present disclosure refers to an electrochemical device that converts the chemical energy of a fuel (often hydrogen) and an oxidizing agent (often oxygen) into electricity through a pair of redox reactions. Fuel cells are different from most batteries in requiring a continuous source of fuel and oxygen (usually from air) to sustain the chemical reaction, whereas in a battery the chemical energy usually comes from substances that are already present in the battery. Fuel cells can produce electricity continuously for as long as fuel and oxygen are supplied.

The terms "doped" and "imbibed" in the context of the present disclosure are used interchangeably. The term "about" or "approximately" means the mentioned value +/-10%, for example about 10 shall mean 9 to 11.

Unless otherwise required by context, singular terms shall include pluralities and plural terms shall include the singular. The use of "or" means "and/or" unless stated otherwise. The use of the term "including," as well as other forms, such as "includes" and "included," is not limiting.

While the present invention has been described with reference to the specific embodiments thereof, it should be understood by those skilled in the art that various changes may be made and equivalents may be substituted without departing from the true spirit and scope of the invention using this disclosure as a guide. Having now described certain embodiments in detail, the same will be more clearly understood by reference to the following examples, which are included for purposes of illustration only and are not intended to be limiting.

### EXAMPLES

Starting materials and reagents disclosed below are known to those skilled in the art, are commercially available and/or can be prepared using well-known techniques.

### Example 1. Synthesis of the precursor Copolymer 1

For the preparation of the precursor polymer, Copolymer 1, in a degassed round-bottom flask, equipped with a magnetic stirrer and a Dean-Stark trap, 2,6-bis(4-hydroxyphenyl)pyridine (7.6 mmol, 2.02 g), 3,3',5,5'-tetramethylbiphenyl-4,4'-diol (7.6 mmol, 1.88 g), 2,2'-diallylbisphenol A (6.6 mmol, 2.03 g), bis(4-fluorophenyl)sulfone (2.2 mmol, 5.63 g), K₂CO₃ (6 g), N,N-dimethylacetamide (DMAc) (80 ml) and toluene (10 ml) were added and the mixture, after it was degassed and purged with argon, was heated at 150 ⁰C for 4h. Then, the temperature was raised to 170 ⁰C, and the azeotropic mixture of toluene/water was extracted. After the completion of the reaction, the mixture was poured in a 5-fold excess of ethanol, to precipitate the polymer. The product was then filtered and washed thoroughly with ethanol and water. Finally, it was dried at 60 ⁰C under vacuum for up to 2 days. 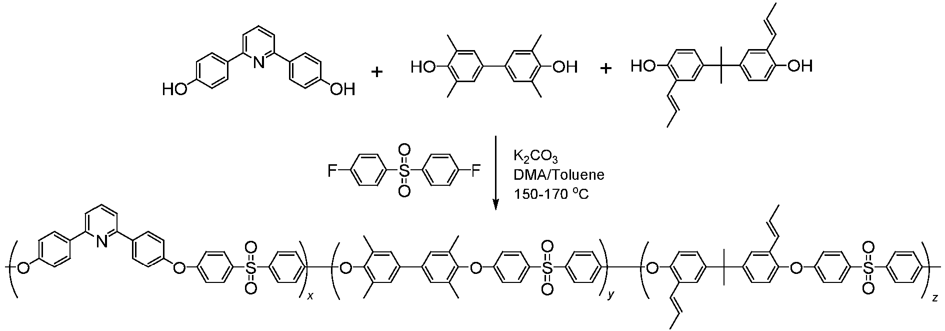 COPOLYMER 1 (wherein 10%<x<40%, 30%<y<50%, 10%<z<50%, and wherein x+y+z=100%)

The precursor polymer was designed to combine a moderate phosphoric acid doping (by using small percentages of pyridine), with a chemical modification ability (imparted by the 2,2'-diallylbisphenol A comonomer) and was the basis of the crosslinked membrane bottom layer. The monomers used for the preparation of the precursor polymer comprise the commercially available bis(4-fluorophenyl)sulfone (diFSO2), 3,3',5,5'-tetramethylbiphenyl-4,4'-diol (TMdiol), 2,2'-diallylbisphenol A (DBdiol) and the monomer 2,6-bis(4-hydroxyphenyl)pyridine (HOpy) that was developed previously by the inventors (Gourdoupi et al; 2003; Chem. Mater.; 15: 5044-5050). The ratio of the monomers TMdiol, DBdiol, and HOpy varied in order to fine-tune the high uptake property of the pyridine moiety, and the density of the crosslinking sites, imparted by the DBdiol moiety. The molecular weight of the synthesized precursor polymer was exceptionally high (up to Mn=110,000 Da and Mw=253,000 Da). The high MWs are critical to provide high mechanical stability on the doped membrane. The polymerization was repeated several times showing the reproducibility of the very high molecular weight polymers as shown in Table 1.

**Table 1. Gel permeation chromatography (GPC) characterization of the precursor polymer.**

| | **Mn^{a} (Da)** | **Mw^{b} (Da)** | **Disp^{c}** |
|---|---|---|---|
| **Copolymer 1A** | 110000 | 253000 | 2.3 |
| **Copolymer 1B** | 84000 | 204000 | 2.4 |
| **Copolymer 1C** | 80000 | 183000 | 2.3 |
| **Copolymer 1D** | 98000 | 235000 | 2.4 |

| | | | |
|---|---|---|---|
| a) Mn=number-average molecular weight, b) Mw= weight average molecular weight, c) Disp=polydispersity, Mw/Mn (obtained after calibration with PS Standards) | | | |

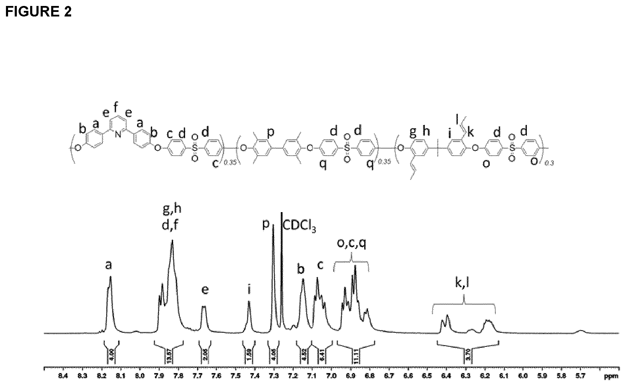

Moreover, the precursor polymer is highly soluble in common organic solvents. As a result, its structure was confirmed by hydrogen-1 nuclear magnetic resonance (¹H-NMR). As it can be seen in Figure 2, the proton peaks at about 6.3 ppm confirm the existence of the double bonds. It is notable that in this case, the multiplicity of the peaks is complicated, due to the rearrangement of the double bonds, because of the existence of K₂CO₃ in the polymerization reaction mixture.

### Example 2: Synthesis of the brominated polymer (Br-pol) Copolymer 2

For the preparation of the Copolymer 2, in a degassed round-bottom flask, the precursor polymer of Example 1 (4.13 mmol, 2 g), N-bromosuccinimide (3,73 mmol, 0,7 g), and chloroform (200 ml) were added and the mixture, after it was degassed and purged with argon, was heated at 70 ⁰C for 16h. After completion of the reaction, the mixture was poured in a 5-fold excess of ethanol, to precipitate the polymer. The product was then filtered and washed thoroughly with ethanol and water. Finally, it was dried at 60 ⁰C under vacuum for up to 2 days. 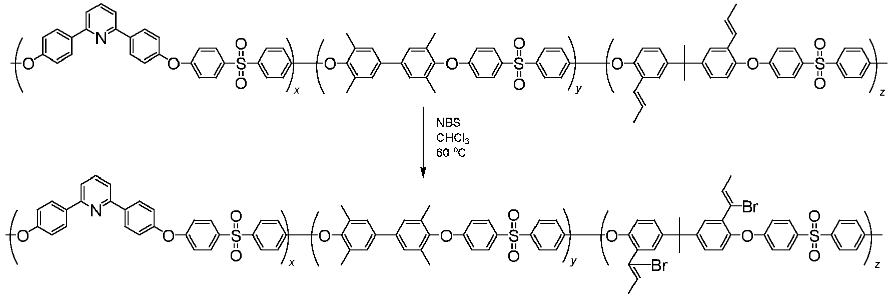 COPOLYMER 2 (wherein 10%<x<40%, 30%<y<50%, 10%<z<50%, and wherein x+y+z=100%)

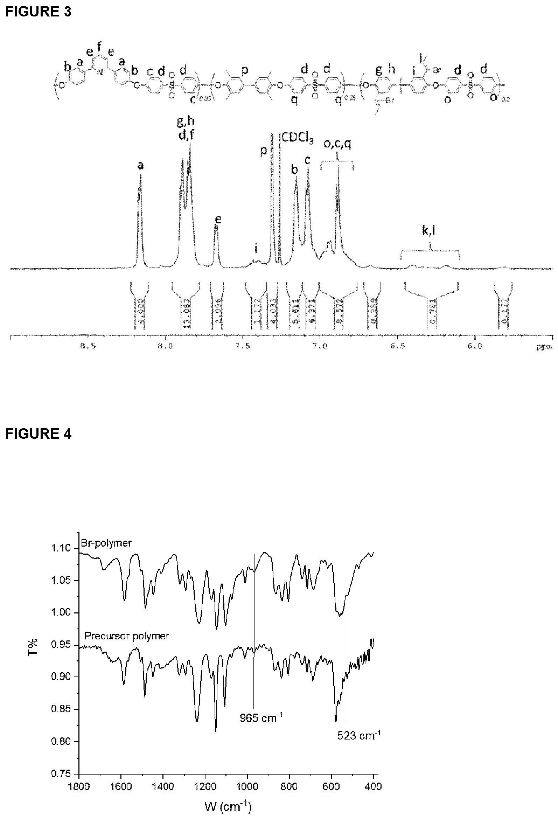

In order to obtain a self-crosslinkable membrane, a bromomethylenic group was used. In this case, the benzene rings in the polymeric structure could attack the bromomethylenic groups in the DBdiol moieties, through a Friedel-Crafts electrophilic substitution reaction. To achieve this, we first brominated the double bonds of the DBdiol moieties, using NBS in chloroform. By carefully tuning the temperature of the reaction, we could avoid the immediate crosslinking of the polymeric chains in the reaction mixture. After obtaining the precipitated polymer, self-crosslinking could occur, during the casting process, without the use of any additional reagents. The structure of the brominated polymer, was confirmed by ¹H-NMR in CDCl₃ (Figure 3).

As it can be seen in Figure 3, the spectrum has few differences compared to the precursor polymer, the basic one being the peaks of the hydrogens of the double bonds (k and l), that appear in reduced quantities. This could be explained by the substitution of the hydrogens by bromine atoms.

The successful bromination of the precursor polymer was also confirmed by Attenuated total reflection (ATR) spectroscopy. As it can be seen in Figure 4, the characteristic peak correlated to the double bonds of the DBdiol moiety at 965 cm⁻¹, confirming the existence of the double bonds after the bromination reaction, ruling out an addition reaction of HBr. Additionally, a shoulder that appears at 523 cm⁻¹ could be attributed to the C-Br bonds that forms after the bromination reaction, as it is not present in the spectrum of the pre-polymer.

### Example 3: Preparation of the Single-layer Membrane of Copolymer 2

For the preparation of the single layer membrane, 230 mg of the Br-polymer, Copolymer 2 was dissolved in 4.6 ml N-Methyl-2-pyrrolidone (NMP). The solution was transferred to a Petri dish (5.5 cm diameter) and was left at 90 °C until complete removal of the solvent. The membrane was peeled-off and was subsequently washed with deionized water. Then the membrane was dried at 60 ⁰C for 16h under high vacuum. The membrane thickness was 60 µm.

### Example 4: Preparation and performance assessment of the Bilayer Membranes

For the preparation of the bilayer membranes consisting of Copolymer 2 and Coplymer 3, 1 g of Coplymer 2 was dissolved in 60 mL of N-methyl-2-pyrrolidone (NMP). The polymeric solution was then transferred in a glass mold (16x18 cm2 ) and was left for 5-7h to remove most of the solvent at 90 °C. When the first layer solution condenses to form a gel-like sticky membrane, the second layer of copolymer 3 [prepared as described in Charalampopoulos, C.; Kallitsis, K. J.; Anastasopoulos, C.; Daletou, M. K.; Neophytides, S. G.; Andreopoulou, A. K.; Kallitsis, J. K. Crosslinked Polymer Electrolytes of High Pyridine Contents for HT-PEM Fuel Cells. Int J Hydrogen Energy 2020, 45 (60), 35053-35063. https://doi.org/10.1016/j.ijhydene.2020.06.004.] dissolved in N,N-Dimethylacetamide (DMA, 1.5g in 70 ml), and was also added in the glass mold to create the double layer membrane. The system was left to evaporate for up to 16 hours at 90 °C. After complete removal of the solvents, the self-standing membrane was peeled off the mold and was washed thoroughly with deionized water. Then it was dried for 12 h at 60 °C under high vacuum. The thickness of the bilayer membrane was 80-100 µm.

Then the bilayer membrane was doped with phosphoric acid. For this reason, the membrane was immersed in an 85% phosphoric acid solution at 120 ⁰C. The weight gain of the samples was calculated at various time intervals (1h,3h, 5h, 1d), after wiping the samples and weighing them. The doping level is defined as the weight percent of the phosphoric acid of each membrane.

The same doping process was also followed for the single layer Copolymer 2 membrane and Copolymer 3 membrane alone, so that the single and bilayer membranes can be compared.

In the process of stabilizing the bilayer membrane through thermal crosslinking during casting, the casting of single layer membranes was first evaluated in order to measure the uptake of phosphoric acid. These single membranes, because of their compositional characteristics and their crosslinking during casting, show low doping ability that peaked at 150% at 120 ⁰C. These can be seen in Table 2. In order to compare the performance of the brominated polymer, Copolymer 2 and assess its performance and its crosslinking ability, we also cast a membrane of copolymer 3 with high pyridine content that has been thoroughly studied [Charalampopoulos, C.; Kallitsis, K. J.; Anastasopoulos, C.; Daletou, M. K.; Neophytides, S. G.; Andreopoulou, A. K.; Kallitsis, J. K. Crosslinked Polymer Electrolytes of High Pyridine Contents for HT-PEM Fuel Cells. Int J Hydrogen Energy 2020, 45 (60), 35053-35063. https://doi.org/10.1016/j.ijhydene.2020.06.004]. It is evident from its uptake (up to 330 wt%) that the cross-linking strategy followed successfully limits the uptake of the brominated polymer membrane. In addition, the crosslinking of the brominated polymer, succeeds at limiting the dimensional stability of the membrane. We can see that while for copolymer 3 the dimensional swelling in the x-y axes is in the range of 10-20%, its z axis swells up to 100%. In contrast, the z-axis swelling of the brominated polymer remains relatively low, at 40%, while the x,y-axis swelling is in the same range as copolymer 3.

**Table 2. Doping of the brominated polymer and copolymer 3 in 85% H₃PO₄ at 120 ⁰C.**

| | **1h** | | **3h** | | **5h** | |
|---|---|---|---|---|---|---|
| | **DL (wt%)** | **Swx* (%)** | **DL (wt%)** | **Swx (%)** | **DL (wt%)** | **Swx (%)** |
| | | **Swy** (%)** | | **Swy (%)** | | **Swy (%)** |
| | | **Swz*** (%)** | | **Swz (%)** | | **Swz (%)** |
| Br-polymer | 150 | 20 | 150 | 20 | 150 | 20 |
| | | | | | | 20 |
| | | 20 | | 30 | | |
| | | 40 | | 40 | | 40 |
| Copolymer 3 | 260 | 20 | 310 | 20 | 330 | 20 |
| | | | | 10 | 20 | 20 |
| | | | | 70 | 90 | 100 |

| | | | | | | |
|---|---|---|---|---|---|---|
| *Swx: swelling in x axis **Swy: swelling in y axis ***Swz: swelling in z axis DL: doping level | | | | | | |

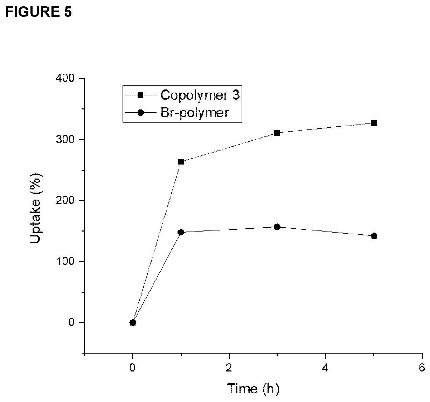

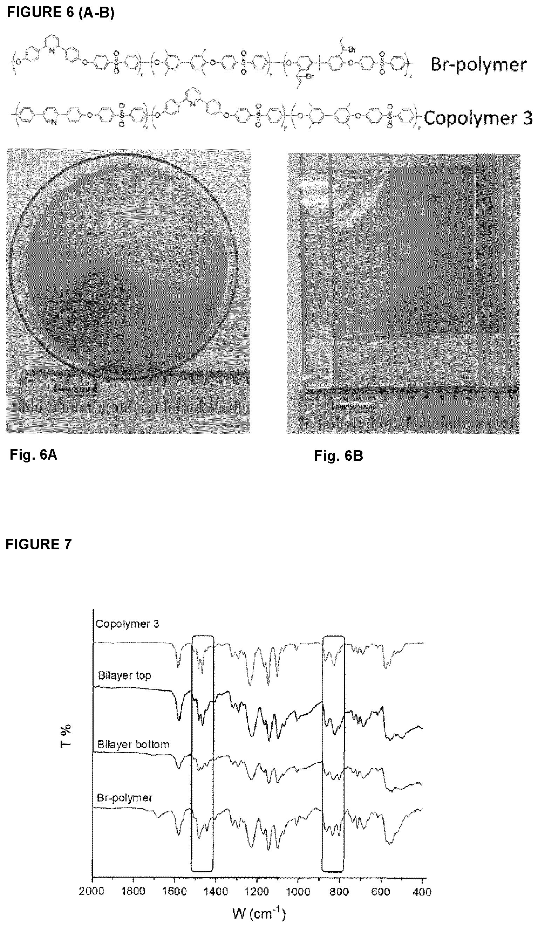

The doping level of the two polymeric membranes can also be seen visually in Figure 5. The same methodology was followed to construct the Bilayer membranes' bottom layer of Copolymer 2 that was subsequently followed by the casting of the second layer composed of Copolymer 3, a high pyridine content aromatic polyether copolymers showing high phosphoric acid uptake (Charalampopoulos, C.; Kallitsis, K. J.; Anastasopoulos, C.; Daletou, M. K.; Neophytides, S. G.; Andreopoulou, A. K.; Kallitsis, J. K. Crosslinked Polymer Electrolytes of High Pyridine Contents for HT-PEM Fuel Cells. Int J Hydrogen Energy 2020, 45 (60), 35053-35063. https://doi.org/10.1016/j.ijhydene.2020.06.004). The bilayer structure is presented schematically in Figure 6 and was casted on a glass substrate.

By comparing the solubilities between the two single layer membranes to the bilayer membrane (Table 3), it is evident that the crosslinking strategy is successful, as Br-polymer is highly insoluble in DMAc, while copolymer 3 is completely soluble. The bilayer membrane as expected shows a small insoluble fraction of 15%, that could be attributed to the crosslinked bottom layer.

**Table 3. Solubility of the membranes in DMAc.**

| | **Insoluble Fraction %** | | **Soluble Fraction %** |
|---|---|---|---|
| **Bilayer** | Before Doping | 15 | 85 |
| | After Doping | 76 | 24 |
| **Br-polymer** | Before Doping | 65 | 35 |
| | After Doping | 100 | 0 |
| **Copolymer 3** | Before Doping | 0 | 100 |
| | After Doping | 63 | 37 |

Moreover, the single and bilayer membranes were characterised via ATR spectroscopy (Figure 7). As it can be seen in Figure 7, the spectra in general present similarities, mainly attributed to the somewhat similar structures of the polymers. However, there are two main regions at 1400-1500 cm⁻¹ and 900-800 cm⁻¹ where there are some differences in the spectra of the top and bottom layers of the bilayer membrane. In particular, the bottom layer that consists of Br-polymer, has peaks at 1480 cm⁻¹ and 1450 cm⁻¹ of the same intensity, while the top layer and Copolymer 3, both have two peaks of the same intensity at these wavenumbers. At 800 cm⁻¹ Br-polymer has a large peak that can also be observed at the bottom layer of the bilayer membrane spectrum. This same peak is appeared for the top layer and Copolymer 3. In general, in the region of 870-800 cm⁻¹ the brominated polymer along with the bottom layer display 3 peaks of the same intensity, while the top layer with Copolymer 3 display 2 peaks of the same intensity, along with a fainter one.

Additionally, different bilayer membranes, namely with different ratios of Copolymer 2 and Copolymer 3, were studied in terms of their PA uptake and the results are shown in Table 4. As it can be seen, the PA uptake of the bilayer membranes are similar or lower to the PA uptake level of the Copolymer 3 membrane, depending on the ratio of the two copolymers. After 5 hours at 120 °C all membranes have reached a somewhat steady doping level in the range of 300-350%.

**Table 4. Doping of the brominated polymer, copolymer 3 and the bilayer membranes in 85% H₃PO₄ and at 120 ⁰C**

| | **1h** | | **3h** | | **5h** | |
|---|---|---|---|---|---|---|
| | **DL (wt%)** | **Swx (%)** | **DL (wt%)** | **Swx (%)** | **DL (wt%)** | **Swx (%)** |
| | | **Swy (%)** | | **Swy (%)** | | **Swy (%)** |
| | | **Swz (%)** | | **Swz (%)** | | **Swz (%)** |
| **Br-polymer** | 150 | 20 | 150 | 20 | 140 | 20 |
| | | 20 | | 30 | | 20 |
| | | 40 | | 40 | | 40 |
| **Copolymer 3** | 260 | 20 | 310 | 20 | 330 | 20 |
| | | 10 | | 20 | | 20 |
| | | 70 | | 90 | | 100 |
| **Bilayer 1** | 250 | 0 | 270 | 20 | 300 | 20 |
| | | 20 | | 30 | | 30 |
| | | 70 | | 80 | | 83 |
| **Bilayer 2** | 185 | 20 | 225 | 20 | 260 | 20 |
| | | 40 | | 40 | | 40 |
| | | 50 | | 60 | | 60 |
| **Bilayer 3** | 238 | 25 | 283 | 30 | 284 | 30 |
| | | 20 | | 20 | | 20 |
| | | 50 | | 60 | | 70 |
| **Bilayer 4** | 320 | 25 | 334 | 25 | 350 | 25 |
| | | 30 | | 30 | | 30 |
| | | 70 | | 70 | | 70 |
| **Bilayer 5** | 226 | 20 | 276 | 25 | 345 | 25 |
| | | 25 | | 25 | | 30 |
| | | 140 | | 140 | | 160 |

## Claims

1. A bilayer polymer electrolyte membrane **characterized in that** said membrane comprises a bottom crosslinked copolymer layer said copolymer being copolymer 2 of the formula 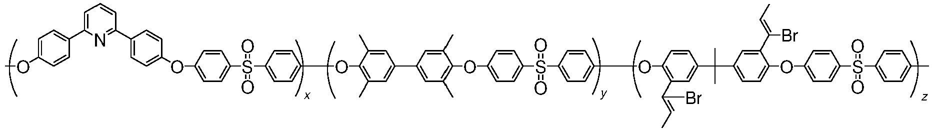
wherein 10%<x<40%, 30%<y<50%, 10%<z<50%, and wherein x+y+z=100%
and a top linear copolymer layer said copolymer being copolymer 3 of the formula 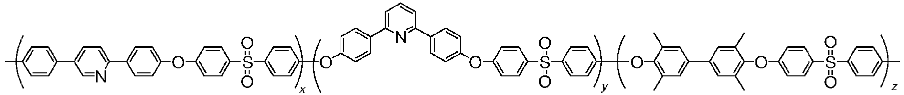
wherein 30%<x<60%, 10%<y<40%, 0%<z<60%, and wherein x+y+z=100%.

2. The bilayer polymer electrolyte membrane of claim 1, wherein said membrane comprises a bottom crosslinked copolymer layer said copolymer being copolymer 2 of the formula 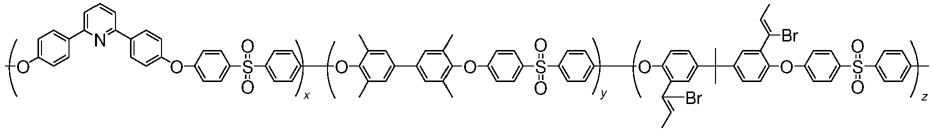
wherein 10%<x<40%, 30%<y<50%, 10%<z<50%, and wherein x+y+z=100%
and a top linear copolymer layer said copolymer being copolymer 3 of the formula 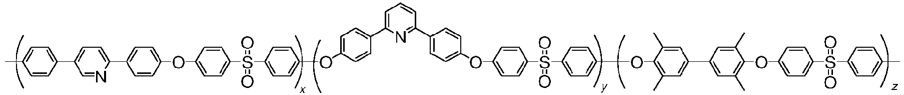
wherein 30%<x<60%, 10%<y<40%, 0%<z<60%, and wherein x+y+z=100%,
and wherein said membrane is imbibed with phosphoric acid.

3. A method of producing a bilayer polymer electrolyte membrane, said method comprising the steps of
- synthesizing a first copolymer with low pyridine content for lower acid uptake in order to form the bottom layer of said membrane, wherein said first copolymer is copolymer 2 of the formula 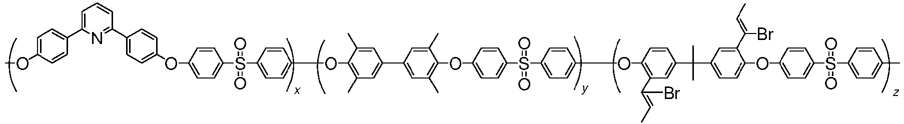 wherein 10%<x<40%, 30%<y<50%, 10%<z<50%, and wherein x+y+z=100%
- adding a second copolymer with high pyridine content for higher acid uptake on top of said first copolymer forming the bottom layer of said membrane, wherein said second copolymer is copolymer 3 of the formula 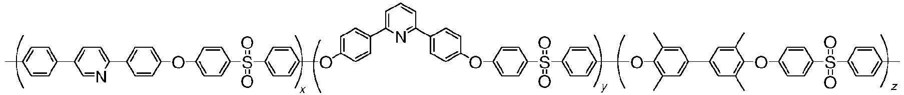 wherein 30%<x<60%, 10%<y<40%, 0%<z<60%, and wherein x+y+z=100%.

4. The method of claim 3 **characterized in that** said method comprises the steps of
- mixing copolymer 1 of the formula 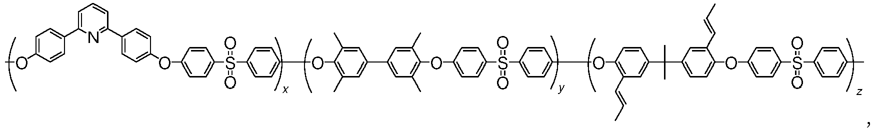
wherein 10%<x<40%, 30%<y<50%, 10%<z<50%, and wherein x+y+z=100%,
with N-bromosuccinimide and chloroform in order to synthesize copolymer 2 of the formula 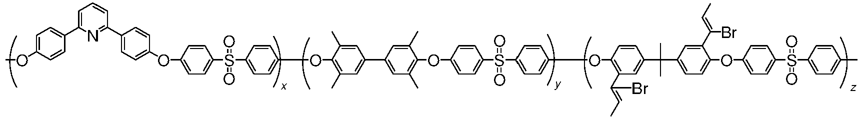
wherein 10%<x<40%, 30%<y<50%, 10%<z<50%, and wherein x+y+z=100%,
- forming a first bottom membrane layer consisting of copolymer 2
- adding copolymer 3 of the formula 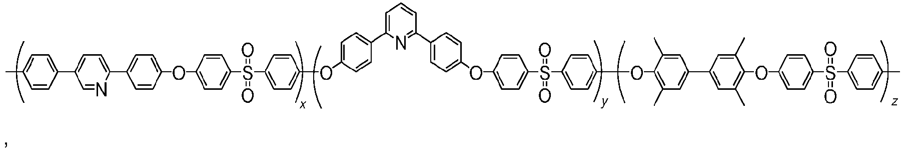
wherein 30%<x<60%, 10%<y<40%, 0%<z<60%, and wherein x+y+z=100%,
on top of said first bottom membrane layer consisting of copolymer 2.

5. The method of any one of claims 3 to 4 **characterized in that** said method comprises the steps of
- mixing copolymer 1 of the formula 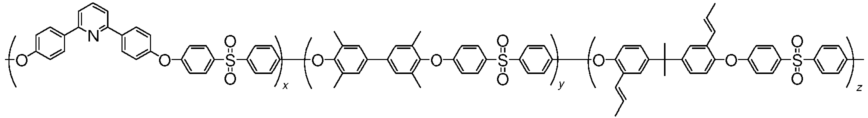
wherein 10%<x<40%, 30%<y<50%, 10%<z<50%, and wherein x+y+z=100%,
with N-bromosuccinimide and chloroform in order to synthesize copolymer 2 of the formula 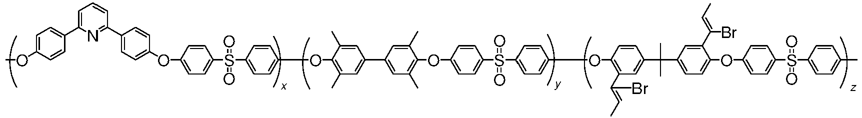
wherein 10%<x<40%, 30%<y<50%, 10%<z<50%, and wherein x+y+z=100%,
- dissolving copolymer 2 in N-methyl-2-pyrrolidone
- pouring said dissolved polymeric solution in a mold or surface
- drying of said polymeric solution so that the solvent is removed and a gel-like membrane is formed
- adding copolymer 3 of the formula 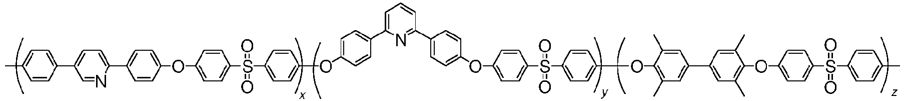
wherein 30%<x<60%, 10%<y<40%, 0%<z<60%, and wherein x+y+z=100%,
dissolved in dimethylacetamide, on top of said first bottom gel like membrane layer consisting of copolymer 2
- drying of said membrane on top of which copolymer 3 was added, so that a bilayer membrane is formed.

6. The method of any one of claims 3 to 5 **characterized in that** said method comprises the steps of
- mixing copolymer 1 of the formula 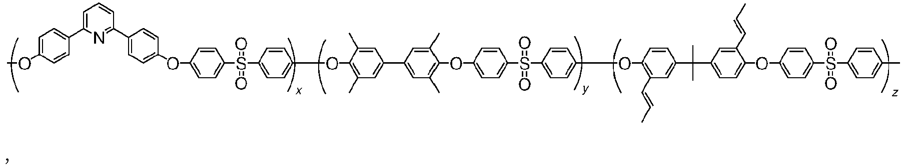
wherein 10%<x<40%, 30%<y<50%, 10%<z<50%, and wherein x+y+z=100%,
with N-bromosuccinimide and chloroform in order to synthesize copolymer 2 of the formula 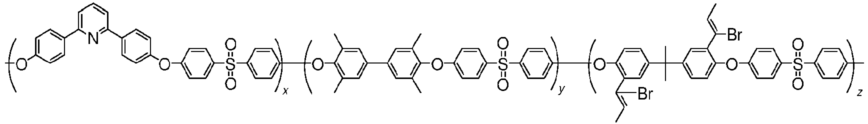
wherein 10%<x<40%, 30%<y<50%, 10%<z<50%, and wherein x+y+z=100%,
- dissolving copolymer 2 in N-methyl-2-pyrrolidone
- pouring said dissolved polymeric solution in a mold or surface
- drying of said polymeric solution so that the solvent is removed and a gel-like membrane is formed
- adding copolymer 3 of the formula 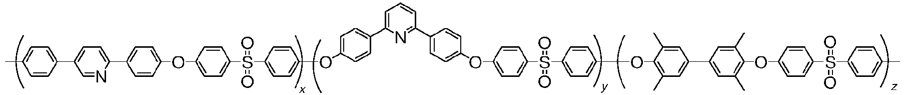
wherein 30%<x<60%, 10%<y<40%, 0%<z<60%, and wherein x+y+z=100%,
dissolved in dimethylacetamide on top of said first bottom gel like membrane layer consisting of copolymer 2
- drying of said membrane on top of which copolymer 3 was added, so that a bilayer membrane is formed.
- immersing said bilayer membrane into a solution of phosphoric acid so that a phosphoric acid doped bilayer membrane is formed.

7. A bilayer polymer electrolyte membrane directly obtainable or obtained by the method of anyone of claims 3 to 6.

8. Use of a bilayer polymer electrolyte membrane of anyone of claims 1 to 2 or 7 for the production of a fuel cell and/or an electrolyzer and/ or a redox flow battery.

9. Use of a bilayer polymer electrolyte membrane of claim 8, wherein said fuel cell is a high temperature polymer electrolyte membrane fuel cell.

## Patentansprüche

1. Eine zweischichtige Polymerelektrolytmembran, **dadurch gekennzeichnet, dass** die Membran eine untere, vernetzte Copolymerschicht umfasst, wobei das Copolymer das Copolymer 2 der Formel 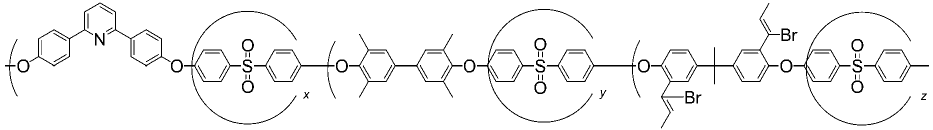
wobei 10 % < x < 40 %, 30 % < y < 50 %, 10 % < z < 50 % und wobei x + y + z = 100 %
sowie eine obere lineare Copolymer-Schicht, wobei es sich bei dem Copolymer um das Copolymer 3 der Formel 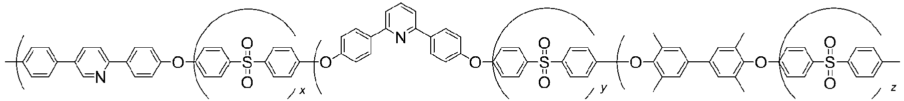 handelt
wobei 30 % < x < 60 %, 10 % < y < 40 %, 0 % < z < 60 % und wobei x + y + z = 100 %.

2. Die zweischichtige Polymerelektrolytmembran nach Anspruch 1, wobei die Membran eine untere, vernetzte Copolymerschicht umfasst, wobei das Copolymer das Copolymer 2 der Formel 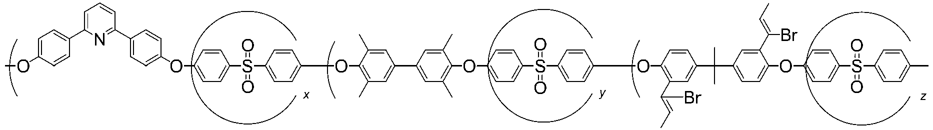
wobei 10 % < x < 40 %, 30 % < y < 50 %, 10 % < z < 50 % und wobei x + y + z = 100 %
sowie eine obere lineare Copolymerschicht, wobei es sich bei dem Copolymer um das Copolymer 3 der Formel 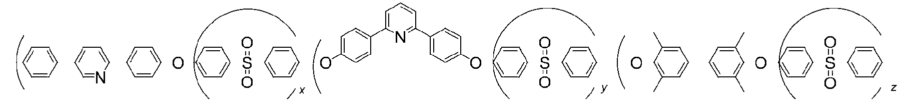 handelt,
wobei 30 % < x < 60 %, 10 % < y < 40 %, 0 % < z < 60 % gilt und wobei x + y + z = 100 % gilt, und wobei die Membran mit Phosphorsäure imprägniert ist.

3. Verfahren zur Herstellung einer zweischichtigen Polymerelektrolytmembran, wobei das Verfahren die folgenden Schritte umfasst:
- Synthese eines ersten Copolymers mit niedrigem Pyridingehalt für eine geringere Säureaufnahme, um die untere Schicht der Membran zu bilden, wobei das erste Copolymer das Copolymer 2 der Formel 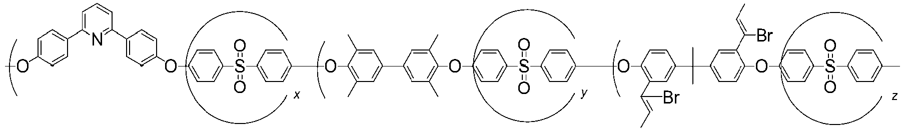 wobei 10 % < x < 40 %, 30 % < y < 50 %, 10 % < z < 50 % und wobei x + y + z = 100 %
- Aufbringen eines zweiten Copolymers mit hohem Pyridingehalt zur Erhöhung der Säureaufnahme auf das erste Copolymer, das die unterste Schicht der Membran bildet, wobei das zweite Copolymer das Copolymer 3 der Formel 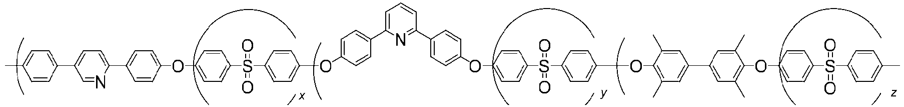 wobei 30 % < x < 60 %, 10 % < y < 40 %, 0 % < z < 60 % und wobei x + y + z = 100 %.

4. Verfahren nach Anspruch 3, **dadurch gekennzeichnet, dass** das Verfahren die folgenden Schritte umfasst:
- Mischen des Copolymers 1 der Formel 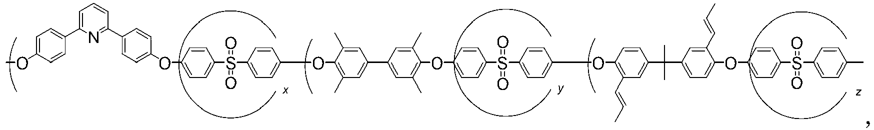
wobei 10 % < x < 40 %, 30 % < y < 50 %, 10 % < z < 50 % und wobei x + y + z = 100 %,
mit N-Bromsuccinimid und Chloroform, um das Copolymer 2 der Formel 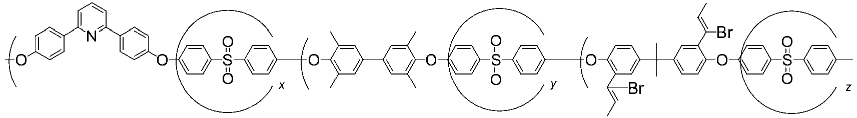
zu synthetisieren
wobei 10 % < x < 40 %, 30 % < y < 50 %, 10 % < z < 50 % und wobei x + y + z = 100 %,
- Bilden einer ersten unteren Membranschicht aus Copolymer 2
- Zugeben von Copolymer 3 der Formel 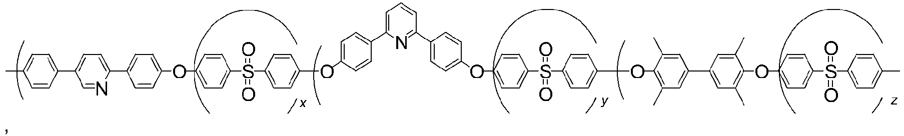
wobei 30 % < x < 60 %, 10 % < y < 40 %, 0 % < z < 60 % und wobei x + y + z = 100 %,
auf der ersten unteren Membranschicht, die aus dem Copolymer 2 besteht.

5. Verfahren nach einem der Ansprüche 3 bis 4, **dadurch gekennzeichnet, dass** das Verfahren die folgenden Schritte umfasst:
- Mischen des Copolymers 1 der Formel 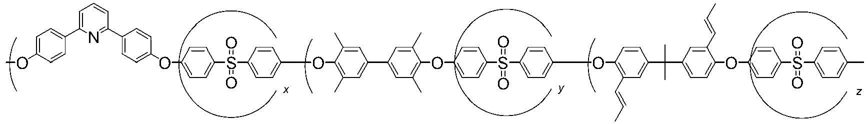
wobei 10 % < x < 40 %, 30 % < y < 50 %, 10 % < z < 50 % und wobei x + y + z = 100 %,
mit N-Bromsuccinimid und Chloroform, um das Copolymer 2 der Formel 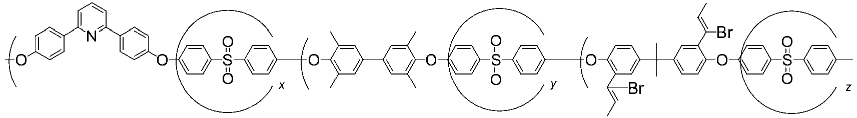
zu synthetisieren
wobei 10 % < x < 40 %, 30 % < y < 50 %, 10 % < z < 50 % und wobei x + y + z = 100 %,
- Auflösen des Copolymers 2 in N-Methyl-2-pyrrolidon
- Eingießen der aufgelösten Polymerlösung in eine Form oder auf eine Oberfläche
- Trocknen der Polymerlösung, so dass das Lösungsmittel entfernt wird und sich eine gelartige Membran bildet
- Zugabe von Copolymer 3 der Formel 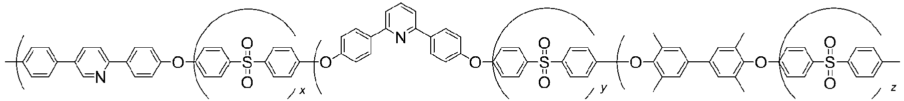
wobei 30 % < x < 60 %, 10 % < y < 40 %, 0 % < z < 60 % und wobei x + y + z = 100 %,
gelöst in Dimethylacetamid, auf die erste, gelartige Membranschicht aus Copolymer 2
- Trocknung der Membran, auf die Copolymer 3 aufgebracht wurde, so dass eine Zweischichtmembran entsteht.

6. Verfahren nach einem der Ansprüche 3 bis 5, **dadurch gekennzeichnet, dass** das Verfahren die folgenden Schritte umfasst:
- Mischen des Copolymers 1 der Formel 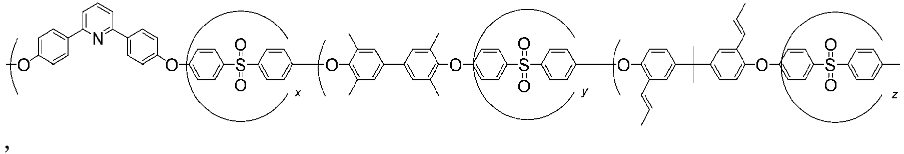
wobei 10 % < x < 40 %, 30 % < y < 50 %, 10 % < z < 50 % und wobei x + y + z = 100 % gilt,
mit N-Bromsuccinimid und Chloroform, um das Copolymer 2 der Formel 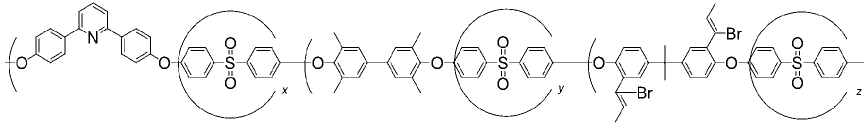
zu synthetisieren
wobei 10 % < x < 40 %, 30 % < y < 50 %, 10 % < z < 50 % und wobei x + y + z = 100 % ist,
- Auflösen des Copolymers 2 in N-Methyl-2-pyrrolidon
- Eingießen der aufgelösten Polymerlösung in eine Form oder auf eine Oberfläche
- Trocknen der Polymerlösung, so dass das Lösungsmittel entfernt wird und sich eine gelartige Membran bildet
- Zugabe von Copolymer 3 der Formel 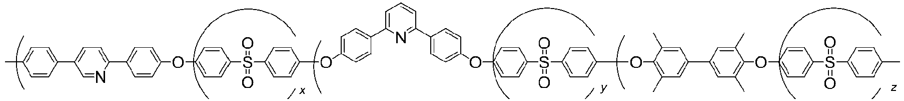
wobei 30 % < x < 60 %, 10 % < y < 40 %, 0 % < z < 60 % und wobei x + y + z = 100 %,
gelöst in Dimethylacetamid auf der ersten, gelartigen Membranschicht, die aus Copolymer 2 besteht,
- Trocknen der Membran, auf die Copolymer 3 aufgebracht wurde, sodass eine Zweischichtmembran entsteht.
- Eintauchen der Zweischichtmembran in eine Phosphorsäurelösung, so dass eine mit Phosphorsäure dotierte Zweischichtmembran entsteht.
- immersing said bilayer membrane into a solution of phosphoric acid so that a phosphoric acid doped bilayer membrane is formed.

7. Eine zweischichtige Polymerelektrolytmembran, die direkt erhältlich ist oder nach dem Verfahren gemäß einem der Ansprüche 3 bis 6 hergestellt wird.

8. Verwendung einer zweischichtigen Polymerelektrolytmembran gemäß einem der Ansprüche 1 bis 2 oder 7 zur Herstellung einer Brennstoffzelle und/oder eines Elektrolyseurs und/oder einer Redox-Flow-Batterie.

9. Verwendung einer zweischichtigen Polymerelektrolytmembran nach Anspruch 8, wobei die Brennstoffzelle eine Hochtemperatur-Polymerelektrolytmembran-Brennstoffzelle ist.

## Revendications

1. Membrane électrolytique polymère bicouche, **caractérisée en ce que** ladite membrane comprend une couche inférieure de copolymère réticulé, ledit copolymère étant le copolymère 2 de formule 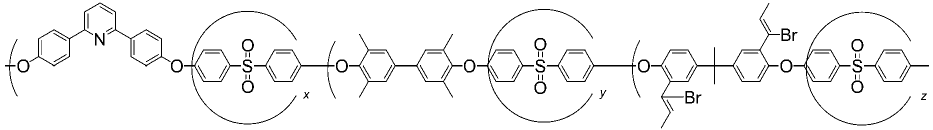
où 10 % < x < 40 %, 30 % < y < 50 %, 10 % < z < 50 %, et où x + y + z = 100 %
et une couche supérieure de copolymère linéaire, ledit copolymère étant le copolymère 3 de formule 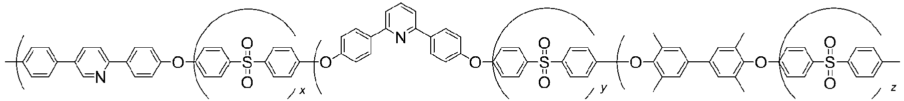
où 30 % < x < 60 %, 10 % < y < 40 %, 0 % < z < 60 %, et où x + y + z = 100 %.

2. Membrane électrolytique polymère bicouche selon la revendication 1, dans laquelle ladite membrane comprend une couche inférieure de copolymère réticulé, ledit copolymère étant le copolymère 2 de formule 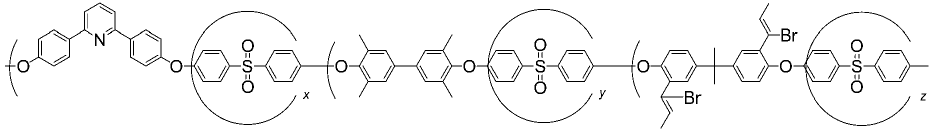
où 10 % < x < 40 %, 30 % < y < 50 %, 10 % < z < 50 %, et où x + y + z = 100 %
et une couche supérieure de copolymère linéaire, ledit copolymère étant le copolymère 3 de formule 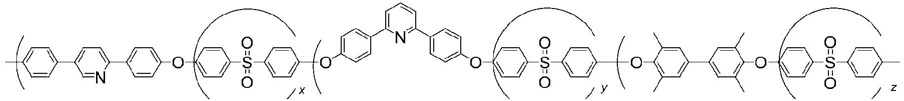
où 30 % < x < 60 %, 10 % < y < 40 %, 0 % < z < 60 %, et où x + y + z = 100 %,
et dans laquelle ladite membrane est imprégnée d'acide phosphorique.

3. Procédé de production d'une membrane électrolytique polymère bicouche, ledit procédé comprenant les étapes consistant à:
- synthétiser un premier copolymère à faible teneur en pyridine pour une absorption d'acide réduite, afin de former la couche inférieure de ladite membrane, ledit premier copolymère étant le copolymère 2 de formuleA method of producing a bilayer polymer electrolyte membrane, said method comprising the steps of 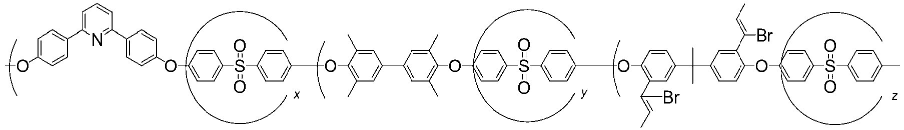 où 10 % < x < 40 %, 30 % < y < 50 %, 10 % < z < 50 %, et où x + y + z = 100 %
- ajouter d'un second copolymère à forte teneur en pyridine pour une absorption d'acide accrue, pardessus ledit premier copolymère formant la couche inférieure de ladite membrane, ledit second copolymère étant le copolymère 3 de formule 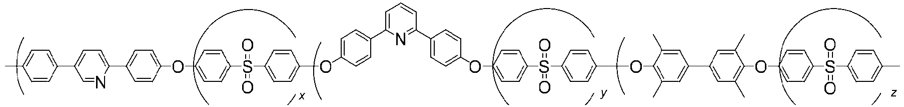 où 30 % < x < 60 %, 10 % < y < 40 %, 0 % < z < 60 %, et où x + y + z = 100 %.

4. Procédé selon la revendication 3, **caractérisé en ce que** ledit procédé comprend les étapes consistant à:
- mélanger le copolymère 1 de formule 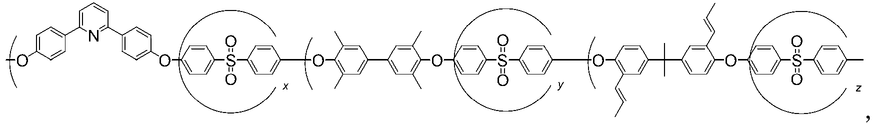
où 10 % < x < 40 %, 30 % < y < 50 %, 10 % < z < 50 % et où x + y + z = 100 %,
avec du N-bromosuccinimide et du chloroforme afin de synthétiser le copolymère 2 de formule 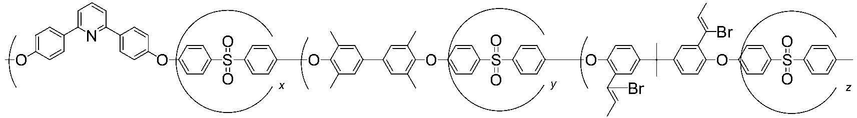
où 10 % < x < 40 %, 30 % < y < 50 %, 10 % < z < 50 % et où x + y + z = 100 %,
- formation d'une première couche de membrane inférieure constituée du copolymère 2
- ajouter du copolymère 3 de formule 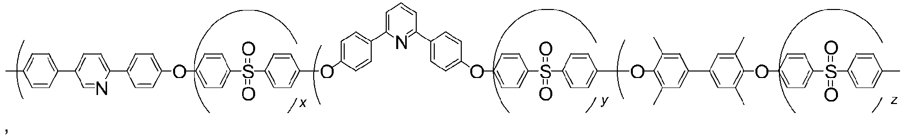
où 30 % < x < 60 %, 10 % < y < 40 %, 0 % < z < 60 % et où x + y + z = 100 %,
sur ladite première couche de membrane inférieure constituée du copolymère 2.

5. Procédé selon l'une quelconque des revendications 3 à 4, **caractérisé en ce que** ledit procédé comprend les étapes consistant à :
- mélanger le copolymère 1 de formule 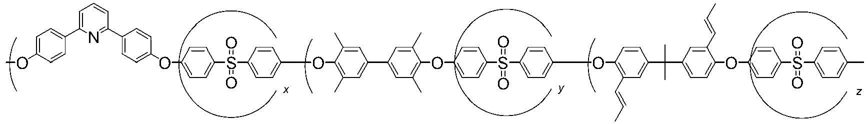
où 10 % < x < 40 %, 30 % < y < 50 %, 10 % < z < 50 % et où x + y + z = 100 %,
avec du N-bromosuccinimide et du chloroforme afin de synthétiser le copolymère 2 de formule 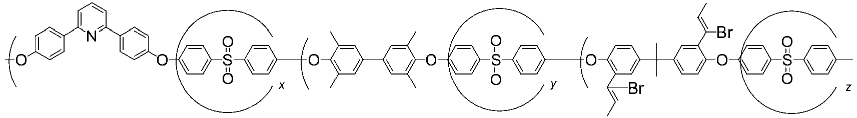
où 10 % < x < 40 %, 30 % < y < 50 %, 10 % < z < 50 % et où x + y + z = 100 %,
- dissolution du copolymère 2 dans la N-méthyl-2-pyrrolidone
- versage de ladite solution polymère dissoute dans un moule ou sur une surface
- séchage de ladite solution polymère de manière à éliminer le solvant et à former une membrane de type gel
- ajout du copolymère 3 de formule 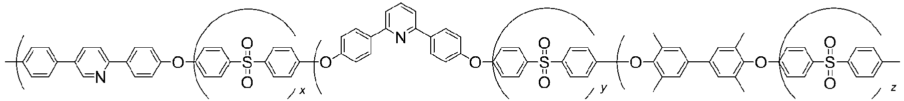
où 30 % < x < 60 %, 10 % < y < 40 %, 0 % < z < 60 % et où x + y + z = 100 %,
dissous dans du diméthylacétamide, sur ladite première couche de membrane inférieure de type gel constituée du copolymère 2
- séchage de ladite membrane sur laquelle le copolymère 3 a été ajouté, de manière à former une membrane bicouche.

6. Procédé selon l'une quelconque des revendications 3 à 5, **caractérisé en ce que** ledit procédé comprend les étapes consistant à :
- mélanger le copolymère 1 de formulehe 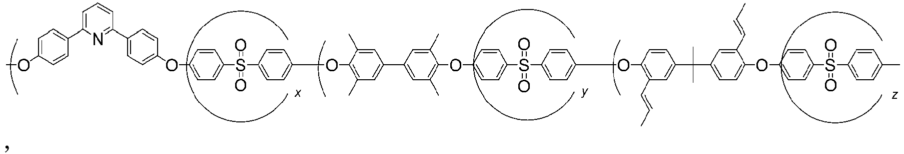
où 10 % < x < 40 %, 30 % < y < 50 %, 10 % < z < 50 %, et où x + y + z = 100 %,
avec du N-bromosuccinimide et du chloroforme afin de synthétiser le copolymère 2 de formule 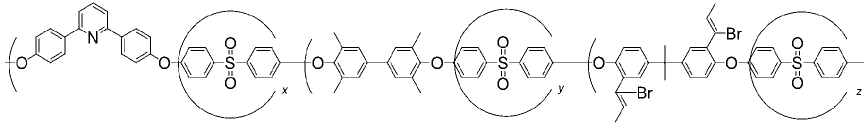
où 10 % < x < 40 %, 30 % < y < 50 %, 10 % < z < 50 % et où x + y + z = 100 %,
- dissolution du copolymère 2 dans la N-méthyl-2-pyrrolidone
- versement de ladite solution polymère dissoute dans un moule ou sur une surface
- séchage de ladite solution polymère de manière à éliminer le solvant et à former une membrane de type gel
- ajout du copolymère 3 de formule 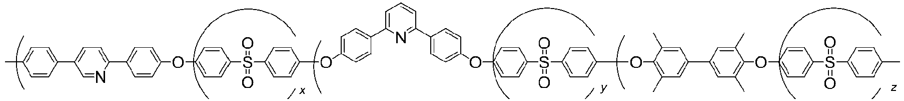
où 30 % < x < 60 %, 10 % < y < 40 %, 0 % < z < 60 % et où x + y + z = 100 %,
dissous dans du diméthylacétamide sur ladite première couche de membrane inférieure de type gel constituée du copolymère 2
- séchage de ladite membrane sur laquelle le copolymère 3 a été ajouté, de sorte qu'une membrane bicouche soit formée.
- immersion de ladite membrane bicouche dans une solution d'acide phosphorique de sorte qu'une membrane bicouche dopée à l'acide phosphorique soit formée.

7. Membrane électrolytique polymère bicouche pouvant être obtenue directement, ou obtenue, par le procédé selon l'une quelconque des revendications 3 à 6.

8. Utilisation d'une membrane électrolytique polymère bicouche selon l'une quelconque des revendications 1 à 2 ou 7 pour la fabrication d'une pile à combustible et/ou d'un électrolyseur et/ou d'une batterie à flux redox.

9. Utilisation d'une membrane électrolytique polymère bicouche selon la revendication 8, dans laquelle ladite pile à combustible est une pile à combustible à membrane électrolytique polymère à haute température.
